# EUROPÄISCHE PATENTSCHRIFT

(11) **EP 0 539 550 B1**
(45) Veröffentlichungstag und Bekanntmachung des Hinweises auf die Patenterteilung: **20.03.1996**
(21) Anmeldenummer: 92909792.1
(22) Anmeldetag: 20.05.1992
(51) Int. Cl.: B60S 1/34

(54) **SCHEIBENREINIGUNGSANLAGE, INSBESONDERE FÜR KRAFTFAHRZEUGE**
WINDSCREEN CLEANING INSTALLATION, ESPECIALLY FOR MOTOR VEHICLES
SYSTEME DE LAVE-GLACE, EN PARTICULIER POUR VEHICULES AUTOMOBILES

(30) Priorität: 25.05.1991 DE 4117107
(43) Veröffentlichungstag der Anmeldung: 05.05.1993
(73) Patentinhaber: ITT Automotive Europe GmbH, D-60488 Frankfurt am Main (DE)
(72) Erfinder: EDELE, Reinhard, D-7123 Sachsenheim 2 (DE); GÖRNER, Eugen, D-7121 Ingersheim 1 (DE); JOHANNES, Reinhard, D-7101 Eberstadt-Hölzern (DE); KARL, Helmut, D-7103 Schwaigern (DE); KRIZEK, Oldrich, D-7120 Bietigheim-Bissingen (DE); SCHMID, Eckhardt, D-7129 Brackenheim (DE)
(86) Internationale Anmeldenummer: EP9201122
(87) Internationale Veröffentlichungsnummer: WO9221536

(56) Entgegenhaltungen:
- EP-A- 0 351 527
- WO-A-00/10561
- WO-A-00/10563
- DE-A- 3 643 476
- FR-A- 1 295 138
- GB-A- 2 079 587
- GB-A- 2 091 544

## Beschreibung

Die Erfindung geht aus von einer Scheibenreinigungsanlage, die insbesondere für Kraftfahrzeuge verwendet wird und die Merkmale aus dem Oberbegriff des Anspruchs 1 aufweist.

Es ist bekannt, ein Rohrstück einer Waschflüssigkeitsleitung in die durchgehende axiale Bohrung der Wischerwelle hineinzustecken oder das aus formstabilem Kunststoff gefertigte Rohrstück auch direkt in die Bohrung einzuspritzen. Der DE-OS 39 07 962, in der dies geoffenbart ist, kann man auch entnehmen, daß sich das Rohrstück mit der Wischerwelle dreht, daß also keine Relativbewegung zwischen dem Rohrstück und der Wischerwelle stattfindet. Dies ist von Vorteil, wenn man ein Anschlußstück oder einen Düsenkörper hat, der auf das wischarmseitige Ende des Rohrstücks aufgesetzt ist und sich mit dem Wischarm mitbewegt. Denn dann findet keine relative Bewegung zwischen dem Rohrstück und dem Anschlußstück bzw. dem Düsenkörper statt, so daß die Verbindungsstelle relativ leicht abzudichten ist. Am wischarmabgelegenen Ende der Wischerwelle steht meist mehr Platz als im Wischarm zur Verfügung, so daß man ein Anschlußstück ebenfalls relativ zu dem mit der Wischerwelle pendelnden Rohrstück ruhen lassen kann, um die Schwenkbewegung eines Anschlußstutzens am Anschlußstück über einen flexiblen Schlauch auszugleichen.

Wenn das Rohrstück nur einen einzigen Kanal besitzt, ist es zwar vorteilhaft, das Rohrstück drehfest zur Wischerwelle in dieser anzuordnen, für die Steuerung der Waschflüssigkeit ist dies jedoch nicht unbedingt notwendig. Anders ist der Sachverhalt, wenn das Rohrstück zwei Kanäle aufweist, durch die Waschflüssigkeit in einer ganz bestimmten zeitlichen Abfolge verschiedenen Waschdüsen zugeführt werden soll. Wenn sich das Rohrstück in der Wischerwelle verdreht, ohne daß sich das oder die Anschlußstücke mitdrehen, kann dies zu einer Verbindung der beiden Kanäle oder auch zu einer zur gewünschten umgekehrten Versorgung der Waschdüsen mit Waschflüssigkeit führen. Es hat sich nun gezeigt, daß bei der aus der DE-OS 39 07 962 gezeigten Scheibenreinigungsanlage die Drehfestigkeit zwischen der Wischerwelle und der Waschflüssigkeitleitung nicht in jedem Fall gewährleistet ist.

Aus der DE-OS 36 43 476 ist eine Scheibenreinigungsanlage in Form einer sogenannten Hubwischeranlage bekannt, bei der eine Waschflüssigkeitsleitung einstückig ein zweikanaliges, durch die Wischerwelle geführtes Rohrstück, zwei innerhalb des Getriebegehäuses des Wischarms verlaufende Röhren zu zwei Waschdüsen und eine Lasche aufweist, mit der die Leitung am Getriebegehäuse festgeschraubt ist. Die Waschflüssigkeitsleitung ist also sozusagen am Befestigungsteil des Wischarms, das durch das Getriebegehäuse dargestellt wird, drehsicher befestigt und ruht somit auch relativ zur Wischerwelle. Allerdings sind bei den in üblicher Weise aufgebauten Wischarmen die Platzverhältnisse im Befestigungsteil so ungünstig, daß eine formschlüssige Befestigung der Waschflüssigkeitsleitung innerhalb des Befestigungsteils nicht möglich ist. Auch kann eine solche Art der Befestigung zu Schwierigkeiten bei der Montage und Demontage eines Wischarms auf oder von der Wischerwelle führen.

Der Erfindung liegt die Aufgabe zugrunde, eine Scheibenreinigungsanlage mit den Merkmalen aus dem Oberbegriff des Anspruchs 1 so weiterzuentwickeln, daß eine Drehfestigkeit zwischen der Wischerwelle und einem in der Wischerwelle verlaufenden Rohrstück der Waschflüssigkeitsleitung sichergestellt ist, ohne daß dafür Platz am Befestigungsteil des Wischarms vorgesehen werden muß und ohne daß dadurch die Montage oder Demontage eines Wischarms erschwert wird.

Diese Aufgabe wird für eine Scheibenreinigungsanlage mit den Merkmalen aus dem Oberbegriff des Anspruchs 1 dadurch gelöst, daß die Leitung am wischarmabgelegenen Ende der Wischerwelle in deren Drehrichtung formschlüssig mit der Wischerwelle verbunden ist.

Vorteilhafte Ausgestaltungen einer erfindungsgemäßen Scheibenreinigungsanlage kann man den Unteransprüchen entnehmen.

Am einfachsten erhält man eine Verdrehsicherheit zwischen der Wischerwelle und der Waschflüssigkeitsleitung dadurch, daß die Wischerwelle außen eine Abflachung besitzt und die Waschflüssigkeitsleitung mit einer außen an der Wischerwelle hochstehenden Wange an der Abflachung anliegt. Vorteilhafterweise wird in die Abflachung auch eine quer zur axialen Richtung verlaufende Rille eingearbeitet, in die die Wange mit einer Nase eingreift, so daß die Leitung an der Wischerwelle axial gesichert ist. Um einerseits die Rille nahe am Ende der Wischerwelle anbringen zu können und um andererseits die gewünschte Flexibilität der Wange bei ausreichender Torsionssteifigkeit, die eine gewisse Dicke der Wange notwendig macht, zu erhalten, ist gemäß Anspruch 5 vorgesehen, daß die Wange axial länger ist als der axiale Abstand zwischen der Rille und der benachbarten Stirnseite der Wischerwelle. Diese größere Länge der Wange erhält man zweckmäßigerweise durch einen Flansch an der Leitung, der sich vor der Stirnseite der Wischerwelle befindet und von dem die Wange, senkrecht zur Achse der Wischerwelle betrachtet, beabstandet ist.

Die Leitung kann einstückig ein von der Wischerwelle aufgenommenes Rohrstück und ein Anschlußstück umfassen. Für diese und auch für die weiteren Betrachtungen ist das Anschlußstück insbesondere dadurch charakterisiert, daß es einen Anschlußstutzen für einen Schlauch aufweist.

Vor allem, wenn verschiedene Leitungen gleiche Rohrstücke haben und sich nur in den Anschlußstücken, z.B. in dem Winkel, in dem der oder die Anschlußstutzen abgehen, unterscheiden, oder aus spritztechnischen Gründen kann es vorteilhaft sein, wenn die Waschflüssigkeitsleitung mehrteilig ein von der Wischerwelle aufgenommenes Rohrstück und ein Anschlußstück umfaßt. Insbesondere in Abhängigkeit von herstellungstechnischen Erwägungen befindet sich dann eine Wange, mit der die Waschflüssigkeitleitung an einer Abflachung der Wischerwelle anliegt, am Rohrstück oder am Anschlußstück. In jedem Fall ist es dann von Vorteil, wenn die Verbindung zwischen dem Rohrstück und dem Anschlußstück durch Formschluß verdrehsicher gemacht ist.

Besitzt das Rohrstück der Leitung wenigstens zwei voneinander getrennte Kanäle und ist das Anschlußstück formschlüssig unmittelbar mit der Wischerwelle verbunden, so ist gemäß Anspruch 11 die Verbindung zwischen dem Rohrstück und dem Anschlußstück durch Mittel, die zum Aneinanderanliegen oder Ineinandergreifen in ihrer Form aneinander angepaßt sind, codiert. Diese Codierung soll sicherstellen, daß das Rohrstück und das Anschlußstück nur in solchen relativen Positionen zueinander ineinandergesteckt werden können, in denen sich die Kanäle im Rohrstück und die entsprechenden Kanäle im Anschlußstück decken. Bei zwei Kanälen im Rohrstück sollen also auch höchstens zwei Positionen des Rohrstücks gegenüber dem Anschlußstück vorhanden sein, in denen diese beiden Teile ineinandergesteckt werden können. Durch eine solche Codierung wird auch schon ein Formschluß zwischen Rohrstück und Anschlußstück erhalten.

Es ist schwierig, lange Rohrstücke in Spritzgußformen herzustellen. Auch sind für Rohrstücke, die sich nur in ihrer Länge voneinander unterscheiden, jeweils andere Formwerkzeuge notwendig. Beides macht die Herstellung von solchen Rohrstücken relativ teuer. Deshalb ist nach Anspruch 14 vorgesehen, daß das Rohrstück von einem extrudierten Rohr abgeschnitten ist. Im Extrudierverfahren kann man mit einer Extrusionsdüse beliebig lange Rohre herstellen, von denen sich die Rohrstücke in den unterschiedlichsten Längen abschneiden lassen. Insbesondere können an einem solchen extrudierten Rohr auch gleich Mittel für einen Formschluß bzw. für eine Codierung der Verbindung zwischen dem Rohr und einem Anschlußstück angeformt werden. Es ist leicht einzusehen, daß die Herstellung von Rohrstücken durch Abschneiden von extrudierten Rohren auch dann von Vorteil ist, wenn das Rohrstück nicht relativ zur Wischerwelle, sondern relativ zur Karosserie eines Kraftfahrzeugs ruht. Insbesondere ist es auch nicht unbedingt notwendig, daß das Rohrstück am wischarmabgelegenen Ende der Wischerwelle mit einem Anschlußstück verbunden ist. Vielmehr ist es auch denkbar, daß ein Schlauch direkt an das Rohrstück angeschlossen ist. Gleiches gilt für das wischarmseitige Ende des Rohrstücks.

Insbesondere, wenn das Rohrstück extrudiert ist, ist es vorteilhaft, daß man die Verbindung zwischen dem Rohrstück und einem Anschlußstück dadurch herstellt, daß das Rohrstück mit einem Ende in einer Aufnahme eines Anschlußstücks steckt. Denn innerhalb eines Kanals des Rohrstücks ist dann nur schwierig eine Hinterschneidung für einen einzusteckenden Teil des Anschlußstücks herzustellen. Jedoch ist das Hineinstecken eines Endes des Rohrstücks in eine Aufnahme eines Anschlußstücks auch dann vorteilhaft, wenn das Rohrstück als Einzelteil spritzgegossen ist. Ebenso bestehen Vorteile auch dann, wenn das Rohrstück relativ zur Karosserie ruht.

Eine Dichtung wird vorteilhafterweise zwischen der Stirnseite des Rohrstücks und dem Boden der Aufnahme am Anschlußstück eingeklemmt, da das Einlegen der Dichtung in die Aufnahme keinerlei Schwierigkeiten bereitet. Besonders zweckmäßig ist diese Anordnung der Dichtung dann, wenn das Rohrstück mehrere Kanäle aufweist, die jeweils durch einen Trennsteg voneinander getrennt sind. Die Dichtung besitzt dann in der bevorzugten Weiterbildung gemäß Anspruch 18 einen Quersteg, auf dem der Trennsteg aufsitzt. Die Dichtung dichtet somit die Verbindung zwischen dem Anschlußstück und dem Rohrstück nach außen und hinsichtlich der verschiedenen Kanäle ab. Dies wäre mit einem O-Ring oder ähnlichem nicht möglich.

Besitzt die Leitung mehrteilig ein von der Wischerwelle aufgenommenes Rohrstück sowie ein erstes Anschlußteil am wischarmabgelegenen und ein zweites Anschlußteil am wischarmseitigen Ende der Wischerwelle, so sind die beiden Enden des Rohrstücks bevorzugt gleich gestaltet. Man muß dann beim Einstecken des Rohrstücks in die Wischerwelle nicht darauf achten, welches Ende des Rohrstücks sich am wischarmabgelegenen oder am wischarmseitigen Ende der Wischerwelle befindet.

Mehrere Ausführungsbeispiele einer erfindungsgemäßen Scheibenreinigungsanlage für Kraftfahrzeuge sind zumindest in Teilen in den Zeichnungen dargestellt. Anhand der Figuren dieser Zeichnungen wird die Erfindung nun näher erläutert.

Es zeigen:
- Figur 1: einen in der Achse der Wischerwelle liegenden Schnitt durch ein erstes Ausführungsbeispiel, bei dem ein Anschlußstück und ein Rohrstück einstückig hergestellt sind,
- Figur 2: ein Rohrstück und ein Anschlußstück eines zweiten Ausführungsbeispiels, wobei Rohrstück und Anschlußstück zweiteilig ausgebildet sind,
- Figur 3: eine Ansicht in Richtung des Teiles A aus Figur 2,
- Figur 4: Rohrstück und Anschlußstück eines dritten Ausführungsbeispiels,
- Figur 5: eine Draufsicht auf das Anschlußstück in Richtung des Pfeiles B aus Figur 4,
- Figur 6: ein wischarmseitiges Anschlußstück für das Rohrstück aus Figur 4 teilweise in Ansicht, teilweise geschnitten,
- Figur 7: in vergrößertem Maßstab einen Ausschnitt aus Figur 5 und
- Figur 8: eine Dichtung verwendet bei dem Ausführungsbeispiel nach den Figuren 2 und 3 bzw. 4 bis 5.

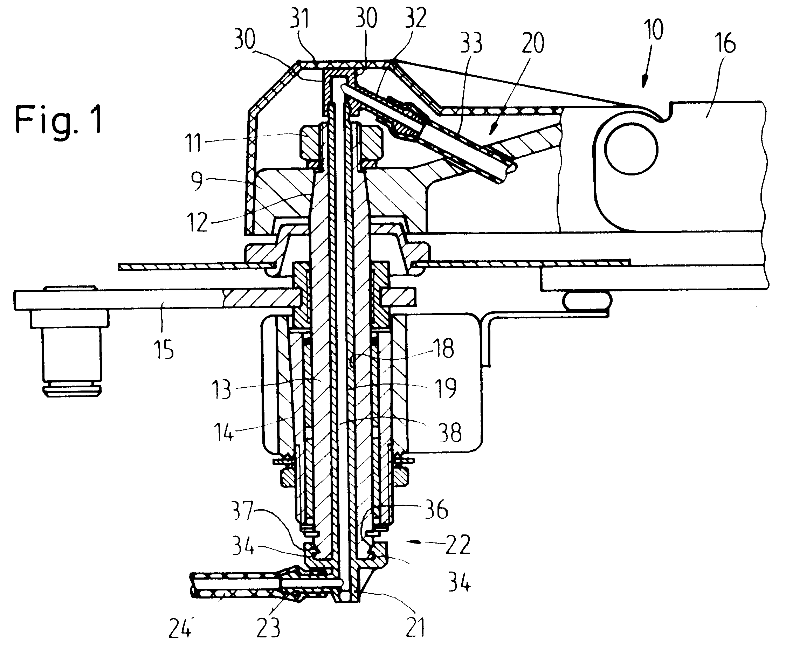

Bei allen Ausführungsbeispielen ist, wie in Figur 1 gezeigt, ein Wischarm 10 mit einer Schraubenmutter 11 auf einem konischen, gerändelten Abschnitt 12 einer Wischerwelle 13 drehsicher befestigt. Die Wischerwelle 13 ist in einem Wischlager 14, das an der Karosserie eines Kraftfahrzeugs befestigt ist, drehbar gelagert und über eine Lagerschwinge 15 von einem nicht näher dargestellten Elektromotor pendelnd antreibbar. Der Wischarm 10 umfaßt ein Befestigungsteil 9, mit dem er auf der Wischerwelle 13 sitzt, und ein Gelenkteil 16, das von der Scheibe 17 des Kraftfahrzeugs wegschwenkbar ist, um diese Scheibe leicht per Hand reinigen zu können oder um ein Wischblatt am freien Ende des Wischarms montieren oder demontieren zu können.

Am Wischarm ist wenigstens eine, nicht näher dargestellte Waschdüse befestigt, der die Waschflüssigkeit durch die Wischerwelle 13 von einem sich innerhalb der Karosserie des Fahrzeugs befindlichen Waschflüssigkeitsbehälter zugeführt wird. Dazu besitzt die Wischerwelle 13 eine zentrale axiale Bohrung 18, in die ein Rohrstück 19 einer insgesamt mit 20 bezeichneten Waschflüssigkeitsleitung eingesetzt ist. Das Rohrstück 19 ist mit einem Anschlußstück 21, das sich am wischarmabgelegenen Ende 22 der Wischerwelle 13 befindet und einen Anschlußstutzen 23 aufweist, einstückig aus Kunststoff hergestellt. Der Anschlußstutzen geht rechtwinklig zur Achse der Wischerwelle und damit zur Achse des Rohrstücks ab. Über ihn ist ein flexibler Silikonschlauch 24 geschoben. Zur Waschflüssigkeitsleitung 20 gehört ein weiteres Anschlußstück 30, das oberhalb der Schraubenmutter 11 auf das über die Wischerwelle 13 vorstehende Rohrstück 19 aufgesetzt ist und das, wie das gesamte Befestigungsteil 9 des Wischarms 10, von einer Kunststoffkappe 31 abgedeckt wird. Von einem Anschlußstutzen 32 des Anschlußstücks 30 aus führt ein flexibler Schlauch 33 den Wischarm 10 entlang zur Waschdüse.

Damit das Rohrstück 19 zusammen mit dem Anschlußstück 21 sicher synchron mit der Wischerwelle 13 und dem Wischarm 10 bewegt wird, sind diese Teile der Waschflüssigkeitsleitung 20 am wischarmabgelegenen Ende 22 der Wischerwelle 13 in deren Drehrichtung formschlüssig mit der Wischerwelle verbunden. Der Formschluß wird durch zwei sich diametral gegenüberliegende Abflachungen 34 und zwei Wangen 35 am Rohrstück 19 bzw. am Anschlußstück 21 hergestellt, wobei die Wangen 35 mit ihrer geraden Innenseite an den Abflachungen 34 anliegen. Jede Abflachung 34 besitzt im Abstand zur nahen Stirnseite der Wischerwelle 13 eine quer zur axialen Richtung dieser Welle verlaufende Rille 36, in die jeweils eine Wange 35 mit einer Nase 37 eingreift. Die Rillen 36 und die Nasen 37 tragen ebenfalls zur Verdrehsicherheit zwischen Rohrstück 19 und Wischerwelle 13 bei, sichern jedoch das Rohrstück 19 und das Anschlußstück 21 auch in axialer Richtung an der Wischerwelle 13. Die Wangen 35 sind leicht federnd ausgebildet, damit die Nasen 37 beim Einstecken des Rohrstücks in die Wischerwelle in die Rillen 36 gelangen können.

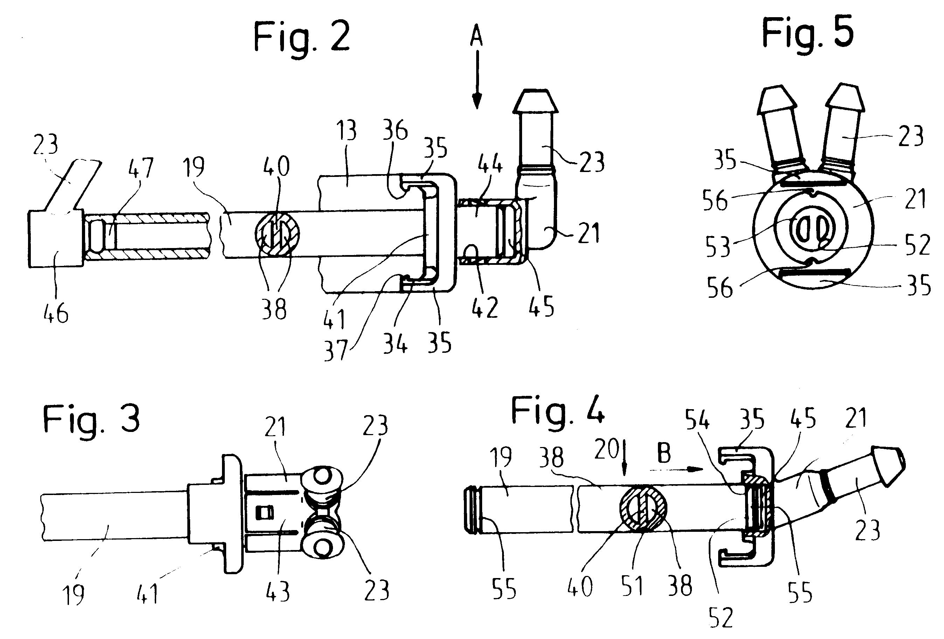

Während bei der Ausführung nach Figur 1 das Rohrstück 19 nur einen einzigen Kanal 38 aufweist, sind in den Figuren 2 und 3 das Rohrstück 19 und das wischarmabgelegene Anschlußstück 21 einer zweiten Ausführung gezeigt, bei der im Rohrstück zwei durch einen Trennsteg 40 getrennte Kanäle 38 und entsprechend am Anschlußstück 21 zwei Anschlußstutzen 23 vorhanden sind. Rohrstück 19 und Anschlußstück 21 sind außerdem zweiteilig aus Kunststoff gefertigt. Dies hat den Vorteil, daß die Teile spritztechnisch einfach hergestellt werden können und daß verschiedene Anschlußstücke 21 am selben Rohrstück 19 befestigt werden können.

Die Einheit aus Rohrstück 19 und Anschlußstück 21 wird ähnlich wie die entsprechende Einheit aus Figur 1 an der in Figur 2 nur angedeuteten Wischerwelle 13 befestigt. Die dazu verwendeten Wangen 35 befinden sich einstückig am Rohrstück 19. Das Rohrstück weist einen an der Stirnseite der Wischerwelle 13 anliegenden Flansch 41 auf, von dem die Wangen 35, senkrecht zur Achse der Wischerwelle 13 betrachtet, beabstandet sind. Dadurch wird erreicht, daß die Wangen 35 axial länger sind als der axiale Abstand zwischen den Rillen 36 und der Stirnseite der Wischerwelle 13. Die Wangen 35 können deshalb leichter federn, ohne daß man den Abstand der Rillen 36 von der besagten Stirnseite hätte vergrößern und damit die Wischerwelle hätte verlängern müssen.

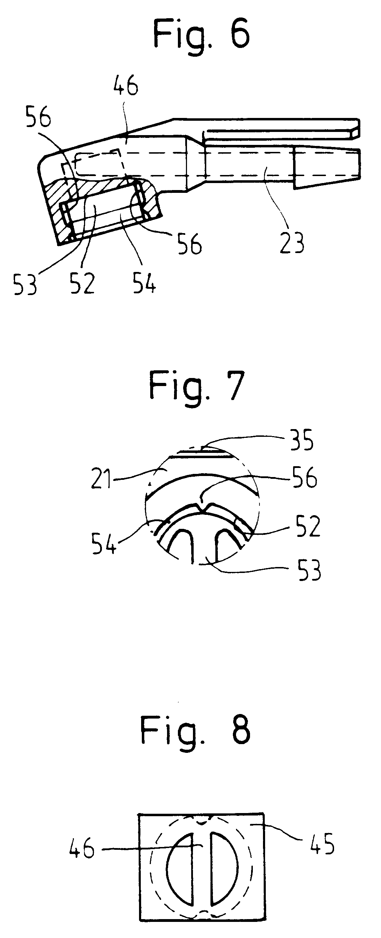

Das Anschlußstück 21 ist mit einer rechteckigen Aufnahme, die in zwei gegenüberliegenden Seitenwänden zwei ausgeschnittene Rastfedern 43 aufweist, auf einen rechteckigen Stutzen 44 des Rohrstücks 19 aufgerastet, wobei Rastnasen an dem Stutzen 44 in Öffnungen der Federn 43 eingerastet sind. Zwischen der Stirnseite des Stutzens 44 und dem Boden der Aufnahme 42 ist eine Dichtung 45 eingeklemmt, die in Figur 8 dargestellt ist. Wesentlich an dieser Dichtung ist ein Quersteg 46, der eine sichere Trennung der beiden Kanäle 38 im Rohrstück 19 und der entsprechenden Kanäle im Anschlußstück 21 gewährleistet.

Auf das wischarmseitige Ende des Rohrstücks 19 aus den Figuren 2 und 3 wird ein Anschlußstück 46 aufgesetzt, das wie das Anschlußstück 21 zwei Anschlußstutzen 23 aufweist und das mit jeweils einem Kanalstumpf 47 in die beiden Kanäle 38 des Rohrstücks 19 eingesteckt ist. Wie bei der Ausführung nach Figur 1 der Anschlußstutzen 32 des Anschlußstücks 30 sollen auch die Anschlußstutzen 23 des Anschlußstücks 46 in Richtung des Wischarms zeigen. Dementsprechend muß das Rohrstück 19 in bestimmter Weise der Wischerwelle 13 zugeordnet sein, was durch den Ort, an dem die Abflachungen 34 an der Wischerwelle 13 und durch den Ort, an dem die Wangen 35 am Rohrstück 19 angebracht sind, gewährleistet ist. Es ist zwar noch möglich, das Rohrstück 19 in zwei um 180° gegeneinander verdrehten Positionen in die Wischerwelle 13 einzustecken, diese beiden Positionen sind jedoch völlig gleichwertig und erlauben das lagerichtige Einstecken des Anschlußstücks 46.

In den Figuren 4, 5 und 6 sind Teile einer Waschflüssigkeitsleitung 20 eines weiteren Ausführungsbeispiels gezeigt, bei dem, wie beim eben beschriebenen Ausführungsbeispiel, ein Rohrstück 19 und ein wischarmabgelegenes Anschlußstück 21 wiederum zweiteilig hergestellt sind. Das Rohrstück 19 ist ein Abschnitt eines im Extrusionsverfahren hergestellten langen Rohres, besitzt wiederum zwei durch einen Trennsteg 40 voneinander getrennte Kanäle 38 und weist zwei Kerben 51 auf, die einander diametral gegenüberliegend im Bereich des Trennsteges 40 am Rohrstück 19 entlanglaufen. Beide Enden des Rohrstücks 19 sind gleich ausgebildet und in eine Aufnahme 52 eines wischarmabgelegenen Anschlußstücks 21 bzw. eines wischarmseitigen Anschlußstücks 46 eingesteckt. Zwischen der Stirnseite des Rohrstücks 19 und dem Boden 53 der jeweiligen Aufnahme 52 ist wiederum eine Dichtung 45 mit einem Quersteg 46 eingeklemmt, deren außen nun kreisrunde Form in Figur 7 mit gestrichelten Linien angedeutet ist. In die Aufnahme 52 jedes Anschlußstücks steht ein Ringwulst 54 vor, der in eine Ringnut 55 des Rohrstücks 19 eingreift. Die Wangen 35 zur Befestigung der Baueinheit aus Rohrstuck 19 und Anschlußstück 21 an der Wischerwelle 13 befinden sich - anders als bei der Ausführung nach Figur 2 - am Anschlußstück 21. Durch den Abstand zwischen ihnen und der Aufnahme 52 können sie genauso lang wie bei der Ausführung nach Figur 2 gemacht werden.

Durch die Abflachungen 34 an der Wischerwelle 13 und durch die Wangen 35 läßt sich das Anschlußstück 21 nur in zwei um 180° gegeneinander verdrehte Positionen an der Wischerwelle befestigen. Damit die beiden Kanäle 38 im Rohrstück 19 richtig über den entsprechenden Kanälen des Anschlußstücks 21 zu liegen kommen, sind die beiden Kerben 51 und zwei in die Aufnahme 52 vorstehende, in axialer Richtung verlaufende und in die Kerben 51 eingreifende Rippen 56 vorgesehen, von denen eine in dem Ausschnitt nach Figur 7 besonders deutlich erkennbar ist. Auch das wischarmseitige Anschlußstück 46 besitzt in seiner Aufnahme 52 zwei längsverlaufende Rippen 56, so daß es nur in zwei bestimmten Positionen auf das Rohrstück 19 aufsetzbar ist. Von diesen beiden Positionen wird bei der Montage normalerweise die ausgewählt, in der die beiden Anschlußstutzen 23 des Anschlußstücks 46 von der Wischerwelle 13 aus in die Richtung auf das ein Wischblatt tragende Ende des Wischarms zeigen. Die Kerben 51 und die Rippen 56 stellen Mittel zur Codierung der Verbindungen zwischen dem Rohrstück 19 und den Anschlußstücken 21 und 46 dar. Dabei entspricht die Anzahl der zwei möglichen Positionen der Zweizähligkeit in der Symmetrie des Querschnitts des Rohrstücks 19.

Ein vergleich der Figuren 4 und 5 zeigt noch, daß die Anschlußstutzen 23 ohne weiteres in unterschiedlicher Weise vom Anschlußstück 21 abgehen können, wobei die dadurch verschieden gewordenen Anschlußstücke 21 im Hinblick auf die Befestigung an der Wischerwelle 13 und auf die Verbindung zum Rohrstück 19 jedoch indentisch ausgebildet sind.

## Patentansprüche

1. Scheibenreinigungsanlage, insbesondere für Kraftfahrzeuge, mit einer Wischerwelle (13), auf der ein Wischarm (10) drehsicher befestigbar ist und die eine durchgehende axiale Bohrung (18) zur Aufnahme einer Leitung (20) aus formstabilem Kunststoff mit mindestens einem Kanal (38) aufweist, über den Waschflüssigkeit wenigstens einer während des Wischvorgangs mit dem Wischarm (10) pendelnden Waschdüse zuführbar ist, **dadurch gekennzeichnet,** daß die Leitung (20) am wischarmabgelegenen Ende (22) der Wischerwelle (13) in deren Drehrichtung formschlüssig mit der Wischerwelle (13) verbunden ist.

2. Scheibenreinigungsanlage nach Anspruch 1, dadurch gekennzeichnet, daß die Leitung (20) wenigstens zwei Kanäle (38) aufweist, über die wenigstens zwei Waschdüsen unabhängig voneinander Waschflüssigkeit zuführbar ist.

3. Scheibenreinigungsanlage nach Anspruch 1 oder 2, dadurch gekennzeichnet, daß die Wischerwelle (13) außen eine Abflachung (34) besitzt und die Leitung (20) mit einer außen an der Wischerwelle (13) hochstehenden Wange (35) an der Abflachung (34) anliegt.

4. Scheibenreinigungsanlage nach Anspruch 3, dadurch gekennzeichnet, daß die Abflachung (34) eine quer zur axialen Richtung verlaufende Rille (36) aufweist, in die die Wange (35) mit einer Nase (37) eingreift.

5. Scheibenreinigungsanlage nach Anspruch 4, dadurch gekennzeichnet, daß die Wange (35) axial länger ist als der axiale Abstand zwischen der Rille (36) und der benachbarten Stirnseite der Wischerwelle (13).

6. Scheibenreinigungsanlage nach Anspruch 5, dadurch gekennzeichnet, daß die Leitung (20) einen vor der Stirnseite der Wischerwelle (13) befindlichen Flansch (41) aufweist, von dem die Wange (35), senkrecht zur Achse der Wischerwelle (13) betrachtet, beabstandet ist.

7. Scheibenreinigungsanlage nach einem der Ansprüche 3 bis 6, dadurch gekennzeichnet, daß die Abflachung (34) oder die Abflachung (34) und die Rille (36) an der Wischerwelle (13) und die Wange (35) an der Leitung (20) einander diametral gegenüberliegend zweimal vorhanden sind.

8. Scheibenreinigungsanlage nach einem vorhergehenden Anspruch, dadurch gekennzeichnet, daß die Leitung (20) einstückig ein von der Wischerwelle (13) aufgenommenes Rohrstück (19) und ein Anschlußstück (21) umfaßt.

9. Scheibenreinigungsanlage nach einem der Ansprüche 1 bis 7, dadurch gekennzeichnet, daß die Leitung (20) mehrteilig ein von der Wischerwelle (13) aufgenommenes Rohrstück (19) und ein Anschlußstück (21) umfaßt und daß sich die Wange(n) (35) am Rohrstück (19) befindet(n).

10. Scheibenreinigungsanlage nach einem der Ansprüche 1 bis 7, dadurch gekennzeichnet, daß die Leitung (20) mehrteilig ein von der Wischerwelle (13) aufgenommenes Rohrstück (19) und ein Anschlußstück (21) umfaßt und daß sich die Wange(n) am Anschlußstück (21) befindet(n).

11. Scheibenreinigungsanlage nach einem der Ansprüche 1 bis 7 und 10, dadurch gekennzeichnet, daß die Leitung (20) mehrteilig ein von der Wischerwelle (13) aufgenommenes Rohrstück (19) mit wenigstens zwei voneinander getrennten Kanälen (38) und ein am wischarmabgelegenen Ende (22) in Schwenkrichtung der Wischerwelle (13) formschlüssig mit der Wischerwelle (13) verbundenes Anschlußstück (21) umfaßt und daß die Verbindung zwischen dem Rohrstück (19) und dem Anschlußstück (21) durch Mittel (51, 56), die zum Aneinanderanliegen oder Ineinandergreifen in ihrer Form aneinander angepaßt sind, codiert ist.

12. Scheibenreinigungsanlage nach Anspruch 11, dadurch gekennzeichnet, daß in dem Rohrstück (19) wenigstens zwei Kanäle (38) in einer Symmetrie angeordnet sind, deren Zähligkeit der Anzahl der Kanäle (38) entspricht, und daß das Rohrstück (19) in ihrer Zahl der Anzahl der Kanäle (38) entsprechenden und um soviel Winkelgrade auseinanderliegenden Positionen, wie die Division von 360° durch die Anzahl der Kanäle (38) ergibt, mit dem Anschlußstück (21) verbindbar ist.

13. Scheibenreinigungsanlage nach Anspruch 11 oder 12, dadurch gekennzeichnet, daß die Mittel (51, 56) zur Codierung durch wenigstens eine in axialer Richtung verlaufende und sich am einen Stück, vorzugsweise dem Rohrstück (19), befindliche Nut (51) und wenigstens eine Rippe (56) am anderen Stück (21) gebildet werden.

14. Scheibenreinigungsanlage, insbesondere nach einem der Ansprüche 1 bis 7 und 10 bis 13, dadurch gekennzeichnet, daß die Leitung (20) ein von der Wischerwelle (13) aufgenommenes Rohrstück (19) umfaßt und daß das Rohrstück (19) von einem extrudierten Rohr abgeschnitten ist.

15. Scheibenreinigungsanlage, insbesondere nach einem der Ansprüche 1 bis 7 und 9 bis 14, dadurch gekennzeichnet, daß das Rohrstück (19) mit einem Ende in einer Aufnahme (52) eines Anschlußstücks (21, 46) steckt.

16. Scheibenreinigungsanlage nach Anspruch 15, dadurch gekennzeichnet, daß das Rohrstück (19) außen eine quer zu seiner Längsrichtung verlaufende Rinne (55) und das Anschlußstück (21, 46) einen Wulst (54) besitzt, der in die Rinne (55) eingreift.

17. Scheibenreinigungsanlage nach Anspruch 15 oder 16, dadurch gekennzeichnet, daß zwischen der Stirnseite des Rohrstücks (19) und dem Boden (53) der Aufnahme (52) am Anschlußstück (21, 46) eine Dichtung (45) eingeklemmt ist.

18. Scheibenreinigungsanlage nach Anspruch 17, dadurch gekennzeichnet, daß die Dichtung (45) einen Quersteg (46) besitzt, auf dem ein zwei Kanäle (38) des Rohrstücks (19) trennender Trennsteg (40) aufsitzt.

19. Scheibenreinigungsanlage nach einem vorhergehenden Anspruch, dadurch gekennzeichnet, daß die Leitung (20) mehrteilig ein von der Wischerwelle (13) aufgenommenes Rohrstück (19) sowie ein erstes Anschlußstück (21) am wischarmabgelegenen und ein zweites Anschlußstück (46) am wischarmseitigen Ende der Wischerwelle (13) umfaßt und daß die beiden Enden des Rohrstücks (19) gleich gestaltet sind.

## Claims

1. A windshield washing system, in particular for motor vehicles, comprising a wiper shaft (13) on which a wiper arm (10) is adapted to be rotatably fixed and said wiper shaft (13) comprising a continual axial bore (18) for receiving a line (20) made from form-stable plastic material with at least one channel (38) for supply washing liquid to at least one washing nozzle moving in pendulum motion with the wiper arm (10) during the wiping process,
**characterized** in that the line ((20) at the end (22) of the wiper shaft (13) remote from the wiper arm is form-fittingly connected with the wiper shaft (13) in said's direction of rotation.

2. A windshield washing system as claimed in claim 1,
**characterized** in that the line (20) includes at least two channels (38) through which at least two washing nozzles can be supplied with washing liquid independent of each other.

3. A windshield washing system as claimed in claim 1 or claim 2,
**characterized** in that the wiper shaft (13) has a flattened side (34) at the outside and the line (20) is positioned with respect to the flattened side (34) by way of a tab (35) extending from the wiper shaft (13) at the outside.

4. A windshield washing system as claimed in claim 3,
**characterized** in that the flattened side (34) includes a groove (36) which extends generally perpendicular to the axial direction and into which the tab (35) engages by way of a nose (37).

5. A windshield washing system as claimed in claim 4,
**characterized** in that the tab (35) is axially longer than the axial distance between the groove (36) and the adjacent front side of the wiper shaft (13).

6. A windshield washing system as claimed in claim 5,
**characterized** in that the line (20) includes a flange (41) situated in front of the front side of the wiper shaft (13), from which flange (41) the tab (35) is spaced, seen in the vertical direction of the axis of the wiper shaft (13).

7. A windshield washing system as claimed in any one of the claims 3 to 6,
**characterized** in that there are a pair of the flattened side (34) or the flattened side (34) and the groove (36) at the wiper shaft (13) and the tab (35) at the line (20) situated diametrically to each other.

8. A windshield washing system as claimed in any one of the preceding claims,
**characterized** in that the line (20) integrally comprises a pipe piece (19) received by the wiper shaft (13) and a connecting piece (21).

9. A windshield washing system as claimed in any one of the claims 1 to 7,
**characterized** in that the line (20) comprises, in several pieces, a pipe piece (19) within the wiper shaft (13) and a connecting piece (21), and in that the tab(s) (35) is (are) situated at the pipe piece (19).

10. A windshield washing system as claimed in any one of the claims 1 to 7,
**characterized** in that the line (20) comprises, in several pieces, a pipe piece (19) within the wiper shaft (13) and a connecting piece (21), and in that the tab(s) is (are) situated at the connecting piece (21).

11. A windshield washing system as claimed in any one of the claims 1 to 7 and 10,
**characterized** in that the line (20) comprises, in several pieces, a pipe piece (19) within the wiper shaft (13) with at least two channels (38) separated from each other and a connecting piece (21) which is situated at the end (22) of the wiper shaft turned away from the wiper arm and which is form-fittingly connected with the wiper shaft (13) in swivelling direction of the wiper shaft (13), and in that this connection between the pipe piece (19) and the connecting piece (21) is coded by means (51, 56) which are matingly fitted to one another for lying on or engaging each other.

12. A windshield washing system as claimed in claim 11,
**characterized** in that there are at least two channels (38) symmetrically arranged in the pipe piece (19), the number of the symmetry corresponding to the number of the channels (38), and in that the pipe piece (19) can be connected with the connecting piece (21) in positions corresponding to the number of channels (38) and arranged at a distance from each other at as many angular degrees as the result of 360 degrees divided by the number of channels (38).

13. A windshield washing system as claimed in claim 11 or 12,
**characterized** in that the means (51, 56) for coding are formed by at least one groove (51) extending in an axial direction and situated on one of the pieces, preferably at the pipe piece (19), and at least one rib (56) at the other piece (21).

14. A windshield washing system especially as claimed in any one of the claims 1 to 7 and 10 to 13,
**characterized** in that the line (20) includes a pipe piece (19) received by the wiper shaft (13), and in that the pipe piece (19) is cut off from an extruded pipe.

15. A windshield washing system especially as claimed in any one of the claims 1 to 7 and 9 to 14,
**characterized** in that one end of the pipe piece (19) is plugged into a recess (52) of a connecting piece (21, 46).

16. A windshield washing system as claimed in claim 15,
**characterized** in that the pipe piece (19) has a flute (55) at the outside extending crosswise to its longitudinal direction and the connecting piece (21, 46) comprises a bulge (54) which engages into the flute (55).

17. A windshield washing system as claimed in claim 15 or 16,
**characterized** in that at the connecting piece (21, 46) a seal (45) is squeezed between the end of the pipe piece (19) and the bottom (53) of the recess (52).

18. A windshield washing system as claimed in claim 17,
**characterized** in that the seal (45) is provided with a cross web (46) on which a separation web (40) is seated which separates two channels (38) of the pipe piece (19).

19. A windshield washing system as claimed in any one of the preceding claims,
**characterized** in that the line (20) comprises, in several pieces, a pipe piece (19) received by the wiper shaft (13) as well as a first connecting piece (21) at the end of the wiper shaft turned away from the wiper arm and a second connecting piece (46) at the end of the wiper shaft (13) situated at the side of the wiper arm, and in that the two ends of the pipe piece (19) are of equal design.

## Revendications

1. Lave-glace, notamment pour véhicule automobile, comprenant un axe d'essuie-glace (13) sur lequel un bras d'essuie-glace (10) peut être fixé et calé en rotation et qui comporte un alésage axial traversant (18) servant à recevoir une tuyauterie (20) en matière plastique indéformable qui comporte au moins un conduit (38) par lequel un liquide de lavage peut être envoyé à au moins un gicleur de lavage animé d'un mouvement oscillant avec le bras d'essuie-glace (10) pendant l'opération de balayage, caractérisé en ce que la tuyauterie (20) est reliée à l'axe d'essuie-glace (13), par complémentarité de formes et suivant la direction de rotation de cet axe d'essuie-glace (13), à l'extrémité (22) de ce dernier située à l'opposé du bras d'essuie-glace.

2. Lave-glace suivant la revendication 1, caractérisé en ce que la tuyauterie (20) comporte au moins deux conduits (38) par lesquels du liquide de lavage peut être envoyé à au moins deux gicleurs de lavage indépendamment l'un de l'autre.

3. Lave-glace suivant la revendication 1 ou 2, caractérisé en ce que l'axe d'essuie-glace (13) comporte extérieurement un méplat (34) et la tuyauterie (20) prend appui sur le méplat (34) par une aile (35) qui se dresse extérieurement sur l'axe d'essuie-glace (13).

4. Lave-glace suivant la revendication 3, caractérisé en ce que le méplat (34) comporte une rainure (36) qui est orientée transversalement à la direction axiale et dans laquelle l'aile (35) s'accroche par un bec (37).

5. Lave-glace suivant la revendication 4, caractérisé en ce que l'aile (35) a une longueur axiale supérieure à la distance axiale séparant la rainure (36) de la face frontale de l'axe d'essuie-glace (13) qui en est voisine.

6. Lave-glace suivant la revendication 5, caractérisé en ce que la tuyauterie (20) comporte une collerette (41) qui est disposée en avant de la face frontale de l'axe d'essuie-glace (13) et dont l'aile (35) est espacée perpendiculairement à l'axe géométrique de l'axe d'essuie-glace (13).

7. Lave-glace suivant l'une des revendications 3 à 6, caractérisé en ce que le méplat (34) ou le méplat (34) et la rainure (36) sur l'axe d'essuie-glace (13) et l'aile (35) sur la conduite (20) sont prévus en double exemplaire et d'une manière diamétralement opposée.

8. Lave-glace suivant l'une des revendications précédentes, caractérisé en ce que la tuyauterie (20) comprend, venus d'une pièce, un tronçon de tube (19), logé dans l'axe d'essuie-glace (13), et une pièce de raccordement (21)

9. Lave-glace suivant l'une des revendications 1 à 7, caractérisé en ce que la tuyauterie (20) comprend, en plusieurs parties, un tronçon de tube (19), logé dans l'axe d'essuie-glace (13), et une pièce de raccordement (21) et en ce que la ou les ailes (35) sont situées sur le tronçon de tube (19).

10. Lave-glace suivant l'une des revendications 1 à 7, caractérisé en ce que la tuyauterie (20) comprend, en plusieurs parties, un tronçon de tube (19), logé dans l'axe d'essuie-glace (13), et une pièce de raccordement (21) et en ce que la ou les ailes sont situées sur la pièce de raccordement (21).

11. Lave-glace suivant l'une des revendications 1 à 7 et 10, caractérisé en ce que la tuyauterie (20) comprend, en plusieurs parties, un tronçon de tube (19), logé dans l'axe d'essuie-glace (13) et comportant au moins deux conduits (38) séparés l'un de l'autre, et une pièce de raccordement (21) reliée à l'axe d'essuie-glace (13), par complémentarité de formes et suivant la direction de pivotement de cet axe d'essuie-glace (13), à l'extrémité (22) de ce dernier située à l'opposé du bras d'essuie-glace et en ce que la liaison entre le tronçon de tube (19) et la pièce de raccordement (21) est codée à l'aide de moyens (51, 56) dont les formes sont adaptées l'une à l'autre de façon à permettre l'emboîtement de l'un sur l'autre ou de l'un dans l'autre.

12. Lave-glace suivant la revendication 11, caractérisé en ce qu'il est prévu, disposés dans le tronçon de tube (19), au moins deux conduits (38) agencés suivant une disposition symétrique dont le degré de symétrie est égal au nombre des conduits (38) et en ce que le tronçon de tube (19) est agencé de façon à pouvoir être relié à la pièce de raccordement (21) suivant des positions dont le nombre est égal au nombre des conduits (38) et qui font entre elles un angle égal à 360° divisé par le nombre des conduits (38).

13. Lave-glace suivant la revendication 11 ou 12, caractérisé en ce que les moyens de codage (51, 56) sont formés d'au moins une rainure (51), orientée suivant la direction axiale et située sur l'une des pièces, de préférence le tronçon de tube (19), et au moins une nervure (56) située sur l'autre pièce (21).

14. Lave-glace, notamment suivant l'une des revendications 1 à 7 et 10 à 13, caractérisé en ce que la tuyauterie (20) comprend un tronçon de tube (19) logé dans l'axe d'essuie-glace (13) et en ce que le tronçon de tube (19) est coupé à longueur dans un tube extrudé.

15. Lave-glace, notamment suivant l'une des revendications 1 à 7 et 9 à 14, caractérisé en ce que le tronçon de tube (19) est emboîté, par une extrémité, dans un logement (52) d'une pièce de raccordement (21, 46).

16. Lave-glace suivant la revendication 15, caractérisé en ce que le tronçon de tube (19) comporte extérieurement une gorge (55) s'étendant transversalement à la direction longitudinale de ce tronçon de tube et la pièce de raccordement (21, 46) comporte un collet (54) qui s'accroche dans la gorge (55).

17. Lave-glace suivant la revendication 15 ou 16, caractérisé en ce qu'une garniture d'étanchéité (45) est serrée entre la face frontale du tronçon de tube (19) et le fond (53) du logement (52) prévu sur la pièce de raccordement (21, 46).

18. Lave-glace suivant la revendication 17, caractérisé en ce que la garniture d'étanchéité (45) comporte une barre transversale (46) sur laquelle prend appui une cloison séparatrice (40) qui sépare deux conduits (38) du tronçon de tube (19).

19. Lave-glace suivant l'une des revendications précédentes, caractérisé en ce que la tuyauterie (20) comprend, en plusieurs parties, un tronçon de tube (19), logé dans l'axe d'essuie-glace (13), une première pièce de raccordement (21) disposée à l'extrémité de l'axe d'essuie-glace (13) située à l'opposé du bras d'essuie-glace et une seconde pièce de raccordement (46) disposée à l'extrémité de l'axe d'essuie-glace (13) situé du côté du bras d'essuie-glace et en ce que les deux extrémités du tronçon de tube (19) ont une structure identique.
